# EUROPÄISCHE PATENTSCHRIFT

(11) **EP 1 156 951 B1**
(45) Veröffentlichungstag und Bekanntmachung des Hinweises auf die Patenterteilung: **26.04.2006**
(21) Anmeldenummer: 00963884.2
(22) Anmeldetag: 08.08.2000
(51) Int. Cl.: B60S 1/08

(54) **VERFAHREN UND VORRICHTUNG ZUM WISCHEN EINER SCHEIBE**
METHOD AND DEVICE FOR WIPING A GLASS SURFACE
PROCEDE ET DISPOSITIF D'ESSUIE-GLACE

(30) Priorität: 28.12.1999 DE 19963460
(43) Veröffentlichungstag der Anmeldung: 28.11.2001
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2000/002634
(87) Internationale Veröffentlichungsnummer: WO 2001/047756

(56) Entgegenhaltungen:
- DE-A- 4 038 350
- DE-A- 4 404 049
- DE-A- 19 756 504
- GB-A- 2 307 398
- US-A- 4 431 954

## Beschreibung

### Stand der Technik

Die Erfindung betrifft ein Verfahren zum Wischen einer mit einer Schaltstufe für intermittierenden Betrieb und eine Vorrichtung nach Gattung der unabhängigen Ansprüche.

Verfahren zum Wischen von Kraftfahrzeugscheiben mit intermittierendem Betrieb sind schon seit langem bekannt und gehören zur Grundausstattung jedes Kraftfahrzeugs.

Grundsätzlich dann, wenn die Niederschlagsmenge sehr gering ist, wird der Wischer in den intermittierenden Betrieb geschaltet, bei dem er in einer Vorwärtsrichtung über eine Scheibe wischt, in einer Umkehrlage seine Richtung wechselt und in einer Rückwärtsrichtung zur Intervallparklage zurückkehrt und dort für eine vorgegebene Zeitspanne verharrt.

Diese Zeitspanne wird jeweils so gewählt, daß genau dann ein neuer Wischvorgang ausgelöst wird, wenn sich eine Sichtbehinderung eingestellt hat.

Problematisch dabei ist jedoch, daß die Scheibe nach dem ersten Überwischen in die Umkehrlage trockengewischt wird und bei Zurücklegung der Wegstrecke von der Umkehrlage in die Intervallparklage der Wischer über eine quasi trockene Scheibe wischt. Dies verursacht ein Rattern des Wischers über die Scheibe, was auf die Wischblätter einen überaus schädlichen Einfluß hat.

Aus der GB-A-2307398 ist ein Verfahren und eine Vorrichtung zum Wischen einer Scheibe mit den Merkmalen den Oberbegriffe der Ansprüche 1 und 7 bekannt. Weiterhin ist aus der DE-A-19756504 ein Verfahren gezeigt, bei dem ein Wischer im intermittierenden Betrieb bei jedem Wischzyklus zu einer Intervallparklage zurückkehrt und dort für eine vorgegebene Zeitspanne verharrt. Die Dauer dieser Zeitspanne ist von der Regenmenge oder von der Geschwindigkeit des Fahrzeugs abhängig.

### Vorteile der Erfindung

Das erfindungsgemäße Verfahren gemäß den kennzeichnenden Merkmalen des Hauptanspruchs hat den Vorteil, daß dadurch, daß der Wischer im Bereich der Umkehrlage für eine vorgegebene Zeitspanne stillgesetzt wird, die Scheibe sich innerhalb dieser Zeitspanne durch den Niederschlag wiederum benetzen kann und der Wischer daher nicht über die trockene Scheibe wischen muß.

Besonders vorteilhaft ist es, wenn die Zeitspanne des Verharrens in der Umkehrlage gleich der Dauer der Zeitspanne ist, der der Wischer in der Intervallparklage verharrt. So ergibt sich zum ersten ein besonders gleichmäßiger Wischbetrieb und zum zweiten wird jeweils, konstanter Niederschlag vorausgesetzt, bei der jeweils gleichem Verschmutzungsgrad gewischt.

Als weiterer Vorteil ergibt sich die Dauer der ersten und der die erste und zweiten Zeitspannen automatisch von der Regenmenge abhängig zu gestalten, um ständig für eine klare Sicht zu sorgen.

Ist die erste und zweite Zeitspanne von der Geschwindigkeit des Fahrzeugs abhängig, so kann auf eine erhöhte Niederschlagsmenge, welche aus einer erhöhten Geschwindigkeit des Fahrzeugs resultiert direkt reagiert werden.

Werden zwei Wischer des Fahrzeugs gegenläufig betrieben, so kann der Wischer jeweils im unteren Bereich und in den Randbereichen der Scheibe angehalten werden.

Werden zwei Wischer gleichlaufend betrieben, so ist es vorteilhaft, den Wischer, welcher im Sichtbereich des Beifahrers ist, eine wesentlich kürzere Zeitspanne fahren zu lassen, als den Wischer, der auf der Fahrerseite angeordnet ist. Der Wischer, der im Bereich des Fahrers angeordnet ist, würde zwar an der A-Säule des Fahrzeugs - also nur im Randbereich des Sichtfeldes - verharren, jedoch würde der Wischer, der im Bereich des Beifahrers angeordnet ist, inmitten des Sichtfelds des Fahrers stehenbleiben.

Ein weiterer Vorteil resultiert aus der Kombination des Verfahrens mit einem Regensensormodul, welches die Zeitspannen des Verharrens in der Intervall- und Umkehrlage jeweils genau der Regenmenge abhängig anpaßt.

Vorteilhaft ist weiterhin, wenn beide Wischer von jeweils eigenen Wischermotoren angetrieben werden. Auf diese Weise kann die Steuerung der beiden Wischer völlig unabhängig erfolgen. Dies ist insbesondere bei einer Gleichlauf-Wischanlage vorteilhaft, da bei dieser die Zeitspannen in denen die beiden Wischer in der Umkehrlage verharren, für Fahrer- und Beifahrerseite unterschiedlich sein können.

### Zeichnungen

Fig. 1 zeigt eine Windschutzscheibe eines Kraftfahrzeugs mit einem Wischerpaar einer Gegenlaufwischanlage in der Intervallparklage.
Fig. 2 zeigt eine Windschutzscheibe mit einem Wischerpaar einer Gegenlaufwischanlage in der Umkehrlage.
Fig. 3 zeigt eine Windschutzscheibe mit einem Wischerpaar einer Gleichlaufwischanlage in der Intervallparklage.
Fig. 4 zeigt ein Wischerpaar einer Gleichlaufwischanlage in der Umkehrlage.
Fig. 5 zeigt eine Windschutzscheibe mit einem Wischerpaar mit verschiedenen Parkstellungen.
Fig. 6 zeigt eine Einrichtung zur Durchführung des Verfahrens nach Anspruch 1 schematisch dargestellt.

### Beschreibung der Ausführungsbeispiele

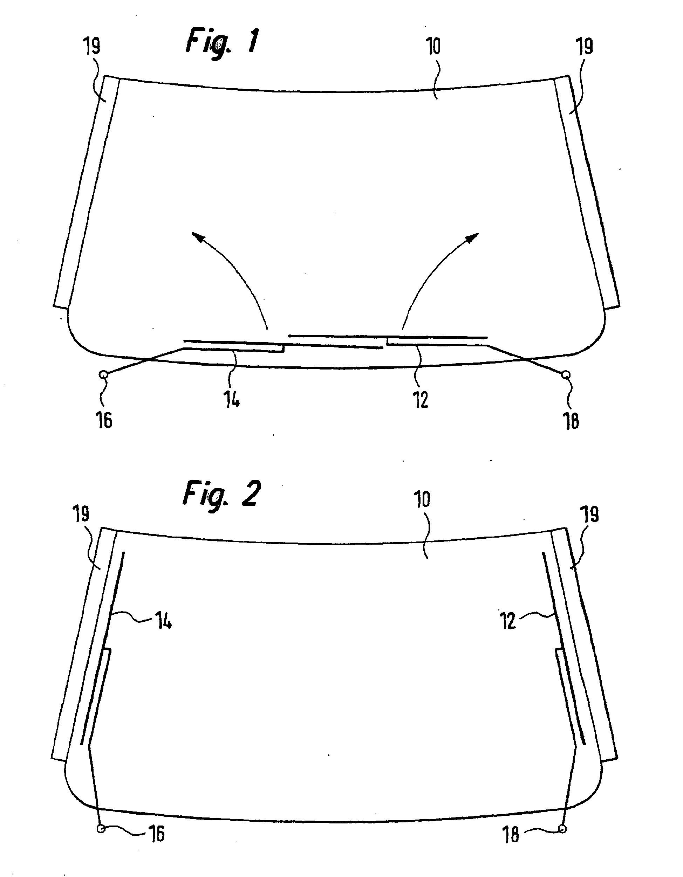

Die Figuren 1 und 2 zeigen eine Windschutzscheibe 10 eines Kraftfahrzeugs mit einer Gegenlauf-Wischanlage.

In Figur 1 ist die Windschutzscheibe 10 dargestellt. Im in Einbaulage unteren Bereich der Windschutzscheibe 10 ist ein im Einbauzustand fahrerseitiger Wischer 12 und ein beifahrerseitiger Wischer 14, in einer Intervallparklage angeordnet. Die beiden Wischer 12, 14 pendeln im Betrieb gegensinnig um ihre Drehachsen 16, 18.

In Figur 2 ist wiederum die Windschutzscheibe 10 wie in Figur 1 dargestellt zu sehen, jedoch sind die beiden Wischer 12, 14 nun in Umkehrlage, im Bereich der A-Säule des Kraftfahrzeugs angeordnet. Erfindungsgemäß verharren die Wischer 12 und 14 dort für eine festgelegte zweite Zeitspanne t2.

Nach Ablauf dieser zweiten Zeitspanne t2 bewegen sich die Wischer 12, 14 wieder aus der Umkehrlage nach innen in die Intervallparklage und verharren dort für eine erste Zeitspanne t1 bis ein neuer Wischzyklus ausgelöst wird.

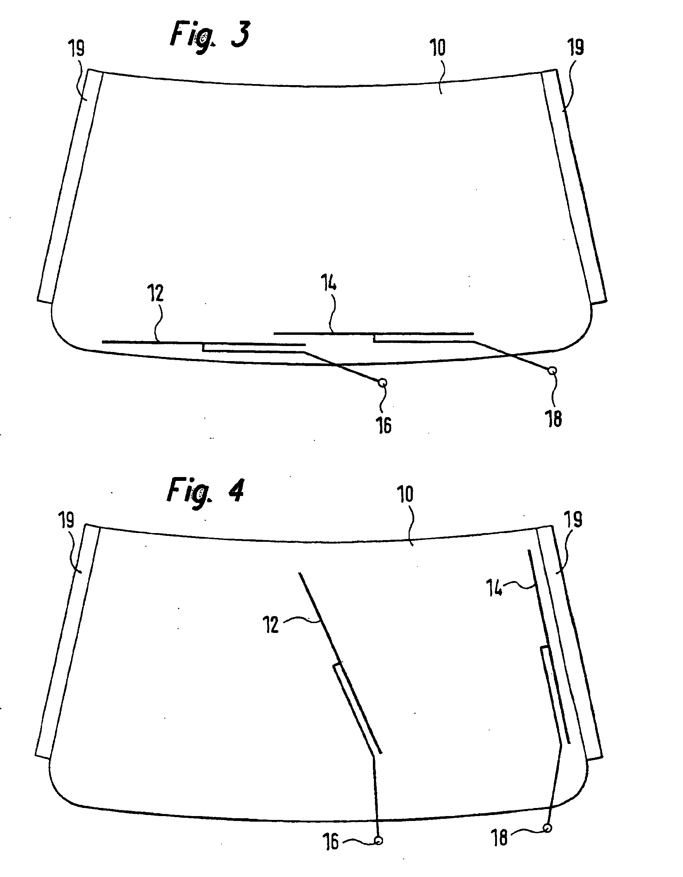

Die Figuren 3 bis 5 zeigen die Windschutzscheibe 10 eines Kraftfahrzeugs mit einer Gleichlauf-Wischanlage.

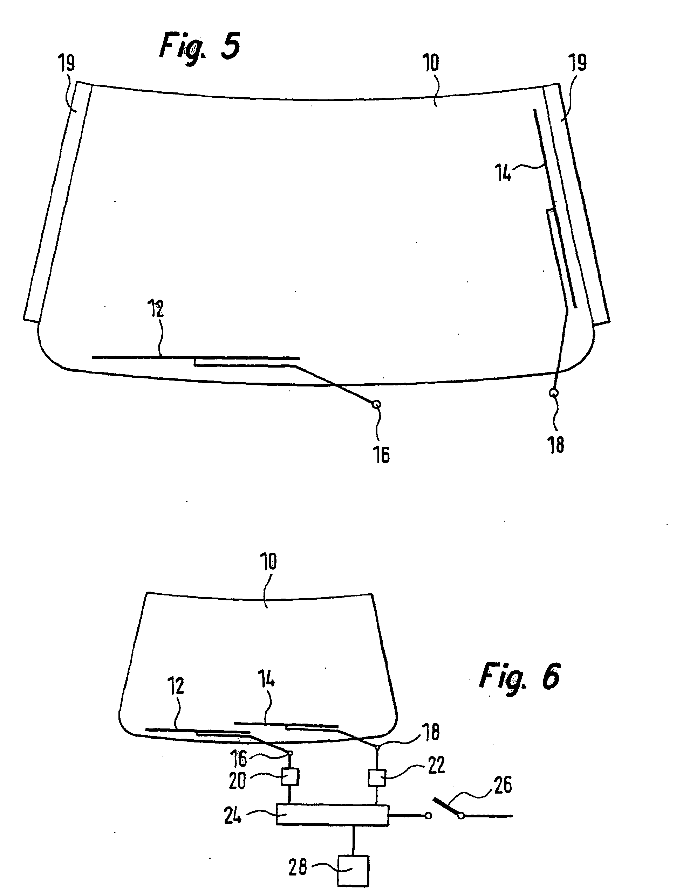

In Figur 3 ist wieder die Windschutzscheibe 10 eines Kraftfahrzeugs dargestellt. Im unteren Bereich der Windschutzscheibe 10 befinden sich zwei Wischer 12, 14, welche im Betrieb gleichsinnig um ihre Drehachsen 16,18 pendeln. Bei dieser Gleichlauf-Wischanlage bewegen sich die Wischer 12, 14 aus der Intervallparklage im Uhrzeigersinn bis zur Umkehrlage und verharren dort für eine zweite Zeitspanne T2. Für jeden der beiden Wischer 12, 14 ist diese Zeitspanne T2 jedoch individuell verschieden. Da sich die Umkehrlage des beifahrerseitigen Wischers 12 bei dieser Gleichlauf-Wischanlage im mittleren Sichtbereich der Windschutzscheibe 10 befindet, was - wie in Figur 4 dargestellt - für den Fahrer sehr störend wirkt, wird die zweite Zeitspanne T2, in der der beifahrerseitige Wischer 12 in der Umkehrlage verharrt, sehr klein oder sogar gleich Null, gewählt. Wie in Figur 5 dargestellt, bleibt die zweite Zeitspanne T2 für den fahrerseitigen Wischer 14, dessen Umkehrlage sich im Randbereich der Windschutzscheibe 10 befindet, davon unberührt. So wird durch das erfindungsgemäße Verfahren immer ein optimales Wischergebnis erzielt.

In Figur 6 ist eine Einrichtung zur Durchführung des Verfahrens nach Anspruch 1 schematisch dargestellt.

Die beiden Wischer 12 und 14 pendeln um ihre Drehachsen 16 und 18. Deren Motore 20 und 22 werden von einer Steuerung 24 angesteuert, welche mit einem Schalter, beispielsweise dem Lenkstockschalter eines Kraftfahrzeugs, verbunden ist. Zur Regelung der Intervall-Zeitspannen T1 und T2 ist die Steuerung 24 noch mit einem Regensensormodul 28 verbunden.

## Patentansprüche

1. Verfahren zum Wischen einer Scheibe (10), insbesondere der Windschutz- oder Heckscheibe eines Kraftfahrzeugs, mit einer Schaltstufe für intermittierenden Betrieb, bei der mindestens ein Wischer (12, 14) im intermittierenden Betrieb, bei jedem Wischzyklus ein erstes Mal in einer Vorwärtsrichtung mit einer Geschwindigkeit v über die Scheibe (10) wischt, in einer Umkehrlage seine Richtung wechselt, in einer Rückwärtsrichtung zu einer Intervallparklage zurückkehrt und dort für eine vorgegebene erste Zeitspanne T1 verharrt, wobei der mindestens eine Wischer (12, 14) im Bereich Umkehrlage für eine vorgegebene zweite Zeitspanne T2 stillgesetzt wird, **dadurch gekennzeichnet, dass** die Dauer der ersten Zeitspanne T1 und zweiten Zeitspanne T2 von der Regenmenge oder von der Geschwindigkeit des Fahrzeugs abhängig ist.

2. Verfahren nach Anspruch 1, **dadurch gekennzeichnet, dass** die Dauer der zweiten Zeitspanne T2 gleich der Dauer der ersten Zeitspanne T1 ist.

3. Verfahren nach Anspruch 1, **dadurch gekennzeichnet, dass** die Regenmenge mittels eines Regensensors (28) bestimmt wird.

4. Verfahren nach einem der vorhergehenden Ansprüche, **dadurch gekennzeichnet, dass** die zwei Wischer (12, 14) gleichlaufend betrieben werden.

5. Verfahren nach dem Anspruch 1, **dadurch gekennzeichnet, dass** die zwei Wischer (12, 14) gegenläufig betrieben werden.

6. Verfahren nach Anspruch 4, **dadurch gekennzeichnet, dass** für den ersten, insbesondere im Sichtbereich des Beifahrers angeordneten Wischer (12), die zweite Zeitspanne T2 wesentlich kleiner gewählt wird, als für den zweiten, im Sichtbereich des Fahrers angeordneten Wischer (14).

7. Vorrichtung, insbesondere zum Wischen einer Scheibe (10) mit mindestens einem, um eine Drehachse (16, 18) zwischen einer Intervallparklage und einer Umkehrlage bewegbaren Wischer (12, 14), der in der Intervallparklage stillsetzbar ist, wobei der Wischer (12,14) auch in der Umkehrlage stillsetzbar ist, **dadurch gekennzeichnet, dass** eine Steuerung (24) zur Durchführung des Verfahrens nach einem der vorhergehenden Ansprüche vorgesehen ist.

## Claims

1. Method for wiping a glass surface (10), in particular the windscreen or rear window of a motor vehicle, with a switching stage for intermittent operation, in which at least one wiper (12, 14) in intermittent operation wipes, during each wiping cycle, over the glass surface (10) for a first time in a forwards direction at a speed v, changes its direction in a reversal position, returns in a rearwards direction to an intermittent parking position and remains there for a predetermined first period of time T1, the at least one wiper (12, 14) being stopped in the reversal position region for a predetermined second period of time T2, **characterized in that** the duration of the first period of time T1 and second period of time T2 is dependent on the amount of rain or on the speed of the vehicle.

2. Method according to Claim 1, **characterized in that** the duration of the second period of time T2 is equal to the duration of the first period of time T1.

3. Method according to Claim 1, **characterized in that** the amount of rain is determined by means of a rain sensor (28).

4. Method according to one of the preceding claims, **characterized in that** the two wipers (12, 14) are operated synchronously.

5. Method according to Claim 1, **characterized in that** the two wipers (12, 14) are operated in an opposed manner.

6. Method according to Claim 4, **characterized in that** for the first wiper (12), arranged, in particular, in the passenger's viewing region, the second period of time T2 is selected to be substantially smaller than for the second wiper (14), arranged in the driver's viewing region.

7. Device, in particular for wiping a glass surface (10) with at least one wiper (12, 14) which can be moved about an axis of rotation (16, 18) between an intermittent parking position and a reversal position and which can be stopped in the intermittent parking position, it also being possible for the wiper (12, 14) to be stopped in the reversal position, **characterized in that** a controller (24) is provided for carrying out the method according to one of the preceding claims.

## Revendications

1. Procédé d'essuyage d'une vitre (10), notamment du pare-brise ou de la lunette arrière d'un véhicule automobile, comportant un mode de fonctionnement intermittent selon lequel au moins un balai d'essuie-glace (12, 14) en mode intermittent, balaye à chaque cycle d'essuyage une première fois en marche avant à la vitesse (v) la vitre (10), alterne le sens en position d'inversion et revient dans la direction de marche arrière dans une position d'arrêt intermédiaire pour y séjourner pendant une première durée prédéterminée (T1), ce balai d'essuie-glace (12, 14) étant arrêté en position d'inversion pendant une seconde durée prédéterminée (T2),
**caractérisé en ce que**
la longueur de la première durée (T1) et de la seconde durée (T2) dépend de la quantité de pluie ou de la vitesse du véhicule.

2. Procédé selon la revendication 1,
**caractérisé en ce que**
la longueur de la seconde durée (T2) est égale à celle de la première durée (T1).

3. Procédé selon la revendication 1,
**caractérisé en ce qu'**
on détermine la quantité de pluie à l'aide d'un capteur de pluie (28).

4. Procédé selon l'une des revendications précédentes,
**caractérisé en ce qu'**
on fait fonctionner les deux balais d'essuie-glace (12, 14) de manière identique.

5. Procédé selon la revendication 1,
**caractérisé en ce qu'**
on fait fonctionner les deux balais d'essuie-glace (12, 14) de manière opposée.

6. Procédé selon la revendication 4,
**caractérisé en ce que**
pour le premier balai d'essuie-glace (12) notamment installé dans le champ de vision du passager avant, la seconde durée (T2) est beaucoup plus courte que l'autre balai d'essuie-glace (14) travaillant dans le champ de vision du conducteur.

7. Dispositif notamment pour essuyer une vitre (10) comportant au moins un balai d'essuie-glace (12, 14) tournant autour d'un axe de rotation (16, 18) entre une position de stationnement intermittente et une position d'inversion, et qui peut être arrêté dans la position de stationnement intermittent,
le balai d'essuie-glace (12, 14) pouvant également être arrêté dans sa position d'inversion,
**caractérisé par**
une commande (24) pour la mise en oeuvre du procédé selon l'une des revendications précédentes.
